# EUROPEAN PATENT SPECIFICATION

(11) **EP 2 804 790 B1**
(45) Date of publication and mention of the grant of the patent: **19.06.2019**
(21) Application number: 12758420.9
(22) Date of filing: 17.08.2012
(51) Int. Cl.: B60S 1/04

(54) **A UNIT FOR FIXING AN AUTOMOTIVE WIPER DEVICE**
EINHEIT ZUR BEFESTIGUNG EINER WISCHERVORRICHTUNG FÜR EIN FAHRZEUG
UNITÉ PERMETTANT DE FIXER UN DISPOSITIF D'ESSUIE-GLACE AUTOMOBILE

(30) Priority: 31.08.2011 PL 39615011
(43) Date of publication of application: 26.11.2014
(73) Proprietor: Valeo Systèmes d'Essuyage, 78322 Le Mesnil Saint Denis (FR)
(72) Inventor: ORZEL, Wojciech, PL-32-050 Skawina (PL)
(74) Representative: Callu-Danseux, Violaine
(86) International application number: PCT/EP2012/066133
(87) International publication number: WO 2013/030018

(56) References cited:
- EP-A1- 1 547 880
- DE-A1- 10 250 843
- DE-A1- 19 860 264
- DE-A1-102008 004 324
- FR-A1- 2 785 247
- US-A1- 2004 244 134
- US-A1- 2006 260 085

## Description

The object of the invention is a unit for fixing an automotive wiper device, comprising at least one pivot housing for setting the shaft for fixing the automotive wiper arm. The invention is used in the automotive industry, especially for the assembly of wipers in passenger cars and trucks.

In typical automotive wiper systems which have been known in the prior art, the wiper arms are fixed to the so-called shaft (axle). The shaft rotates alternately in opposite directions within a specific angle and thus makes the wiper arm move over the car windshield and then return to the home position. The wiper systems are driven by electric motors. Usually, the electric motor uses a system of suitable external devices, pull rods etc. to drive two or more shafts (axles), to which the wipers are fixed.

The solutions known in the prior art use pivot housings provided with a part provided for fixing them to the car by means of a grommet. Between two pivot housings, a support element is fitted, to which the wiper motor, the pull rod set etc. are fixed. For example, such fixing system has been disclosed in the international patent application no PCT/EP2008/064497. In the solution shown in this publication in fig. 1, pivot housings 3, 4 comprise grommets 5, 6, which are used to fix them to a car. Shafts 7, 8 which are set in the pivot housings are provided for fixing the wiper arms on them. Pivot housings 3, 4 are interconnected by means of a specially profiled tube 2, to which the motor and pull cord set are fixed.

A similar solution is known from a German patent application no DE 10 2008 004 324 A1. In this case, the shaft placed in the pivot housing can rotate (tilt) against the tube interconnecting the pivot housings.

The significant disadvantage of all wiper systems in which the pivot housing is fixed directly to a car is the fact, that the position of the shaft in the pivot housing against the parts fixing the pivot housing to the car is determined in them. That is the reason, why the shape and dimensions of the pivot housings are each time selected and designed especially for a specific car model and in most cases are not suitable for use in other models. It is caused by the fact, that each car has its own distinctive specific geometry of the windshield (width, height, inclination angle) and a specific space available for the wiper system (packaging), which translates into the specific assembly points of wiper shafts as well as the assembly points of the car wiper system. The specific pivot housing design, unique for a given vehicle, makes it also necessary to use special custom-designed tools for the production of pivot housings and then to test their strength in multi-week testing programmes. It is naturally unfavourable for the car manufacturers and their vendors since it causes additional costs, makes the car development stage longer and makes it impossible to adjust the arm position without interfering with the tools for the production of pivot housings.

Furthermore, various ways of fixing the wiper motor unit on the tube interconnecting the pivot housings are known in the prior art. For example, the German patent application no DE 10 2008 041 264 A1 discloses a connection of a tube with a motor unit by constricting the tube with a suitable pivot tenon, the jaws of which are screwed together by means of a bolt. In this process, the support element is deformed in an assumed way, resultantly forming a stable fixing. On the other hand, in the German patent application no DE 10 2008 042 011 A1, the motor unit is fixed to the tube by means of a screw, the support element being suitably shaped in the area of fixing. A similar solution, in which the motor unit is screwed to a tube with bolts, is disclosed in the European patent application no EP 2 067 672. However, none of these designs solves the problems mentioned in previous paragraph. US-A-2006/0260085 shows the preamble of claim 1.

Therefore, the aim of the present invention is to provide a universal set for fixing the automotive wiper device, that is, a device which would be suitable for use in various types and models of cars, and in which the distance of the assembly point of the shaft in the pivot housing from the assembly point of the entire unit to the car and the mutual distance of the shafts from each other and their inclination against the automotive windshield would be freely set, according to the specific characteristics of the given car model, without having to develop new tools for the production of the pivot housing.

Another aim of the present invention is to provide a universal set for fixing the automotive wiper device, which would be safe for pedestrians / pedestrian participants of an accident.

According to the invention, a unit for fixing an automotive wiper device, comprising at least one pivot housing for setting the automotive wiper arm fixing shaft, is characterised in that said pivot housing is suspended through a pivot tenon on a support element, the ends of the support element being provided with grommets for fixing the support element to the car.

Preferably, said unit comprises one, two or three said pivot housings, each of which is suspended through a pivot tenon on said support element.

Preferably, said pivot housing and said pivot tenon are made of organic material, preferably by extrusion or injection, and are connected with each other by bonding, welding or by means of external elements, preferably a buckle, a rivet or a bolt.

The term "organic material", used in the present description and in the patent claims, includes plastics as well as more and more frequently used organic recyclable materials, e.g., glued and pressed sawdust, cellulose, fabrics etc., which can be organic materials with properties sufficient for the current use although obtaining these properties in case of these materials is still too expensive.

Alternatively, according to the invention, said pivot housing and said pivot tenon are made of an aluminium alloy, zinc alloy, magnesium alloy, steel, sintered material or made in the extrusion, injection, sintering, cold or hot moulding technology and are connected with each other by soldering, welding, bonding, creasing or connected by means of external elements, preferably a buckle, a rivet or a bolt.

Preferably, said pivot tenon comprises an element provided for setting the pivot housing in it and an element fixing the pivot tenon to the support element.

In such case, said element is connected with said clamp element by means of cold plastic forming of metal sheets, soldering or welding.

In a preferred embodiment of the invention, said elements and constitute a single, integrally formed part.

According to the invention, said support element has a specially shaped area provided for fixing said pivot tenon, said pivot tenon having an internal profile matched to fit the external profile of said support element in said area.

Preferably, said pivot tenon has projections at the ends of its internal profile.

In such case, preferably, said pivot tenon has at least one protrusion or cavity on its internal profile, preferably an even number of protrusions or cavities.

According to the invention, said pivot tenon is fixed on said support element by crimping the support element into it.

In such case, said pivot tenon may be additionally glued, soldered or welded to said support element.

In a preferred embodiment of the invention, said support element is a tube.

Preferably, said pivot housing on its inner surface has at least one rib, directed towards the centre of the pivot housing, and preferably two or more such ribs.

Preferably, said rib is preliminary sheared.

In a preferred embodiment of the invention, said rib has a smaller dimension at the base connecting with the pivot housing and a bigger dimension above, and preferably it is additionally inclined around the axis of the shaft.

In another preferred embodiment of the invention, said rib has an alternating cross section along its axis.

Preferably, according to the invention, on said support element there are holes facilitating the positioning and fixing of said pivot tenon on said support element.

The important advantage of the solution according to the invention is its universality. Owing to the fact, that fixing the pivot housing directly to the car has been abandoned and the pivot housing has instead been suspended on the support element (for example, a tube), which is fixed to the car through grommets - the distance between the point of fixing the shaft in the pivot housing and the point of fixing said grommets to the car is practically free to choose, without changing the support element (the tube) or interfering with other components of the wiper system. One, two, three or even more pivot housings - as needed - can be suspended on said support element and the distance between them can be freely adjusted. Before permanently combining the pivot housing with the pivot tenon (e.g. gluing, welding) - the pivot housing can be freely positioned by rotating it against the pivot tenon and also by rotating the pivot tenon against with support element. It practically allows the shaft to be freely positioned and, as a result, to adjust the position of the wiper arms to any automotive windshield. Finally, in order to implement the hereby solution in any car model, it is sufficient to adjust the length and possibly the support element (a tube) to that car model. The other components (pivot housings, pivot tenons) and the way of suspending on the support element (the tube) remain unchanged. This allows standardisation of these elements and standardisation of tools used to fix assemble them. Custom-designed parts or tools are no longer always indispensable.

On the other hand, the rib or ribs on the inner surface of the pivot housing, preliminarily sheared during the assembly of the bearing, allow ensuring protection of pedestrians / pedestrian participants of an accident. The typical, known in the prior art, setting of the shaft location in the pivot housing by means of a bearing and a Seeger ring ensures, that the shaft retains its position under loads related to the regular use or servicing of a car, and in case of a collision - does not fall out of the pivot housing. However, the disadvantage of that setting is that it endangers a pedestrian in case of a collision with the car. However, resting the bearing on the preliminarily sheared rib or ribs - according to the present invention - ensures safety of a pedestrian who would hit the shaft from the above in case of an accident. If that happens, the rib or ribs are sheared by the impact force, whereas the shaft will fall inside the pivot housing without causing any injury to the pedestrian's body. The additional advantage of the preliminarily sheared ribs is that it is possible to measure the force required to insert bearings while assembling each pivot housing, which then makes it possible to control the force which makes the shaft fall into the pivot housing. This gives the possibility to fully control the force which affects human health or life in the manufactured pivot housings while simultaneously retaining the functionality of the pivot housing by keeping the shaft in the operational position during the entire period of using the vehicle equipped with universal pivot housings with preliminarily sheared ribs/rib.

The pedestrian protection solutions as well as the connections between the bearing and the pivot housing are described in quite a detailed way, for example in the following publications: US5067198A, US4914777A, JP2001106032A, EP1040972B1, EP0916559B1, US3298754A, US2878506A, EP1074442A2, EP1033295A2. The very feature of the solution according to the present invention which distinguishes itself against the prior art is the implementation of the preliminarily sheared ribs, which gives the possibility to measure the force during the initial shearing that follows when the bearing and the pivot housing are put together. The recommended solution can be used in the wiper systems or for other purposes.

The invention will now be presented more closely in preferred embodiments, with references to the attached drawings, wherein:
- Fig. 1: shows the general view of the unit for fixing the automotive wiper device according to the invention, discussed in the example 1,
- fig. 2: shows a close-up view of the pivot housing and the pivot tenon according to the invention, made of plastic, as well as the support element after fixing it in the pivot tenon,
- fig. 3: shows a close-up view of another example of the pivot housing and the pivot tenon according to the invention, made of aluminium, with a visible rib (example 2),
- fig. 4: (a, b, c, d, e, f) - illustrates the way of setting the position of the pivot housing against the pivot tenon (a) and of the pivot tenon against the support tube (b) as well as the way of fixing the pivot tenon on the support tube (c, d, e) by means of a pressure element and various variants of the pressure element profile (f),
- fig. 5: (a, b, c, d, e) shows selected, preferable shapes of the cross section of the pivot tenon in the point, where it is fixed to the tube and in the point, where the pivot tenon is connected to the pivot housing, for injected or extruded,
- fig. 6: (a, b) shows a close-up view of another example of the pivot housing and the pivot tenon - a general view (a) and a cross section A-A (b),
- fig. 7: (a, b, c) shows schematically the way of assembling the shaft in a pivot housing provided with ribs (example 4) and the way, in which the shaft behaves during the assembly (a), regular operation (b) and in case of an impact (c), and
- fig. 8: (a, b) shows the embodiment of the pivot housing, in a cross-section view (a) and a top view (b), and
- fig. 9: (a, b) shows the pivot tenon integrated with a typical motor of a wiper system (example 5) - (a) a pivot tenon integrated with a motor gear case, (b) a pivot tenon integrated with a motor gear case cover.

The following references are used on the drawings: 1 - pivot housing, 2 - shaft, 3 - pivot tenon, 4 - support element, 5 - grommet, 6 - holes in the support element, provided to facilitate setting the pivot tenon, 7 - element for fixing the pivot housing in it; 8 - area of the support element on which the pivot tenon is fixed, 9 - protrusions or cavities setting the support element, 10 - projection, 11 - rib, 12 - slide bearing, 13 - Seeger ring, 14 - wiper motor, 15 - motor components used to fix it to the support element, 16 - wiper system motor gear case, 17 - wiper system motor gear cover, 18 - element pressing the support element into the pivot tenon (a pressure element), 19 - clamp element designed for fixing it to the support element.

### Preferred Embodiments of Invention

### Example 1

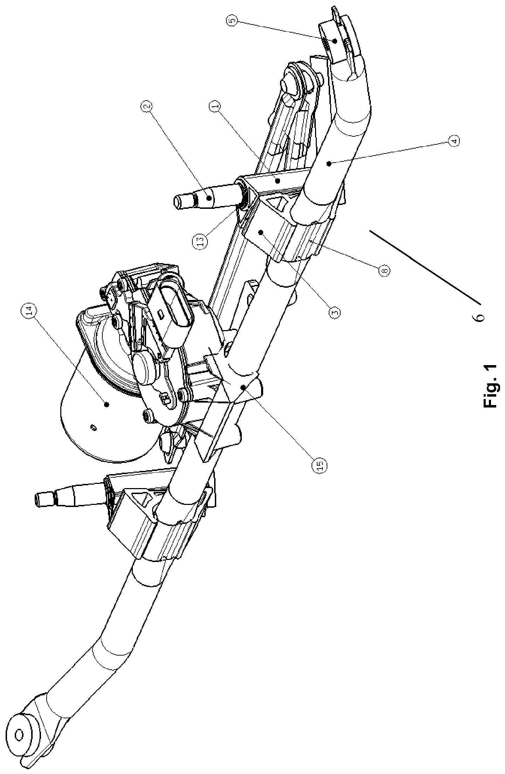

Fig. 1 shows the embodiment of the unit for fixing the automotive wiper device according to the invention. In the shown example, two pivot housing 1 - pivot tenon 3 units are suspended on the support element 4 - in this case, a tube. Both elements of the support element 4 are provided with grommets 5, provided to fix the wiper device to the car. The areas 8 of the support element 4, to which the pivot tenon 3 is fixed have a proper shape, adjusted to the inner profile of the pivot tenon 3. This adjustment can be performed during the assembly of the support element 4 with the pivot tenon 3, without the need to perform additional procedures or operations of preliminary deformation of the support element 4 or to use additional connecting elements which is discussed in greater detail in the embodiment 4. In pivot housings 1, the set shafts 2 are shown. The pivot tenons 3 are positioned at a desired angle against the tube 4, whereas the pivot housings 1 are positioned at a desired angle against the pivot tenons 3. As a result, a position of the shafts 2 proper for the given car model is obtained. Between the pivot housings 1 on the tube 4, the wiper motor unit 14 is also fixed. The mutual distance between the pivot housings can be adjusted while maintaining the geometry of the element 4. Such adjustment may take place independently of points of fixing the tube 4 to the car.

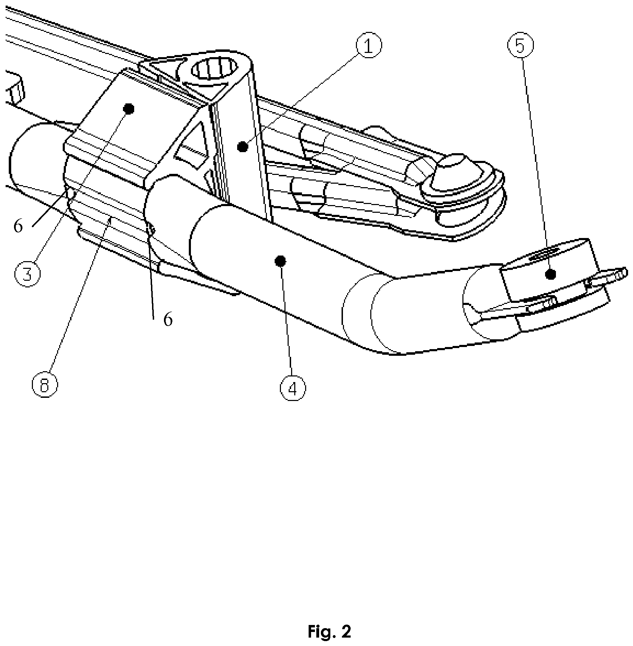

Fig. 2 shows a close-up view of the pivot housing 1 and the pivot tenon 3 of the unit visible in fig. 1. In this case, the pivot housing 1 and the pivot tenon 3 are made of plastics, by means of extrusion method. The inner surface of the pivot housing 1 has a polygonal cross section, but optionally it can be a circular cross section. In the present embodiment, the pivot housing 1 plays a role of a bearing due to good tribological properties of plastics. In case a bearing is used, the cross section working with the bearing can be elliptical or irregular. The pivot housing 1 can be rotated against the pivot tenon 3 before them being glued or welded.

Optionally, two, three or more pivot housing 1 - pivot tenon 3 units can be suspended on the tube 4.

### Example 2

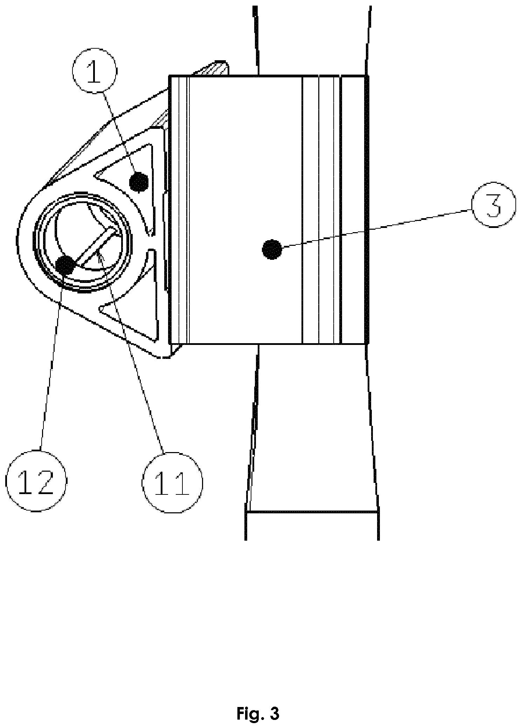

Fig. 3 shows a general close-up view of another pivot housing 1 and the pivot tenon 3, similar to that of the unit visible in fig. 1. In the case shown in fig. 3, the pivot housing 1 and the pivot tenon 3 are made of a profile of an aluminium alloy. Alternatively, good materials are e.g. other metal alloys, such as zinc, magnesium, sintered materials as well as organic materials formed in the process of extrusion, injection, cold or hot moulding. The inner surface of the pivot housing 1 has a shape of a cylinder with the rib 11. The purpose of the rib 11 is to increase the safety of pedestrians in case of an accident. It can also be used to determine the position favourable with regard to the load of slide sleeves, which more and more frequently replace slide bearings made of copper alloys or plastics. The role of the rib 11 is explained in greater detail in the example 4.

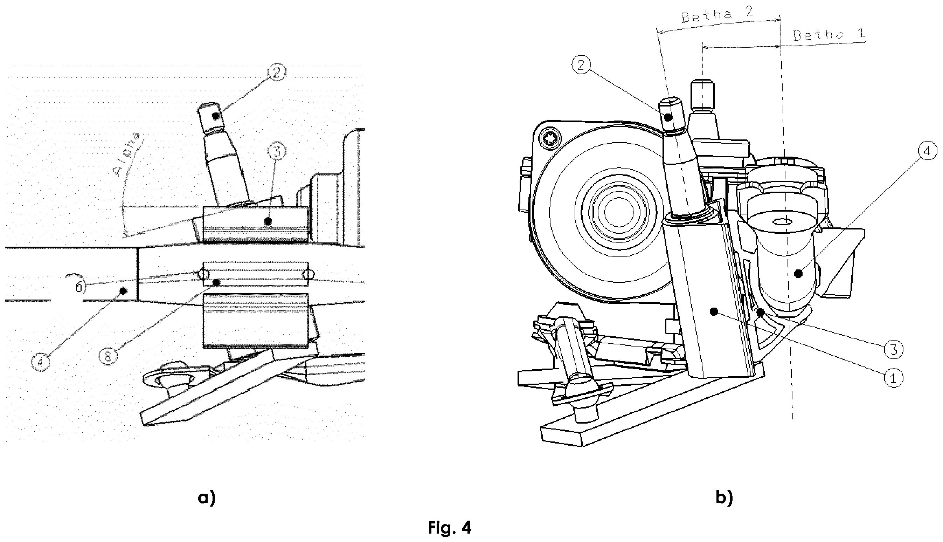

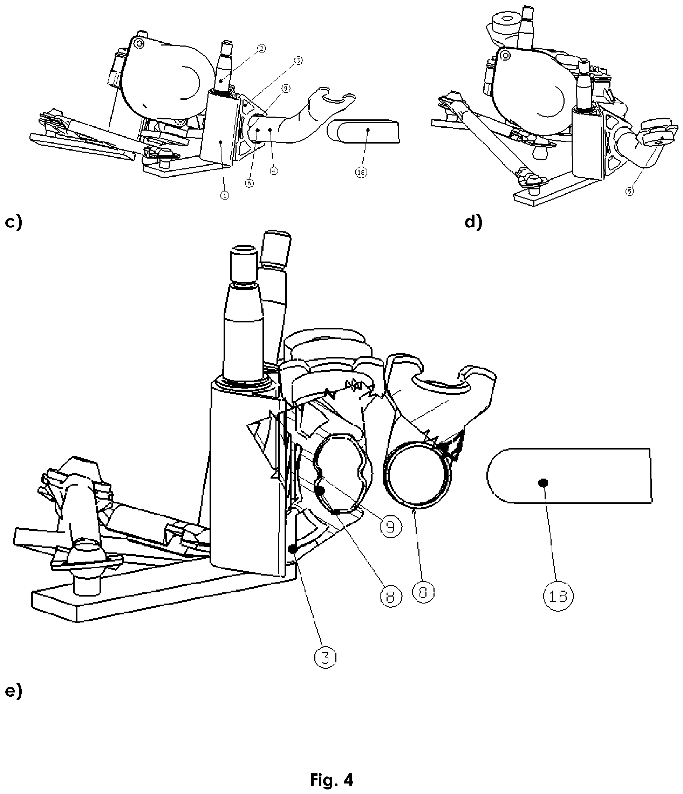

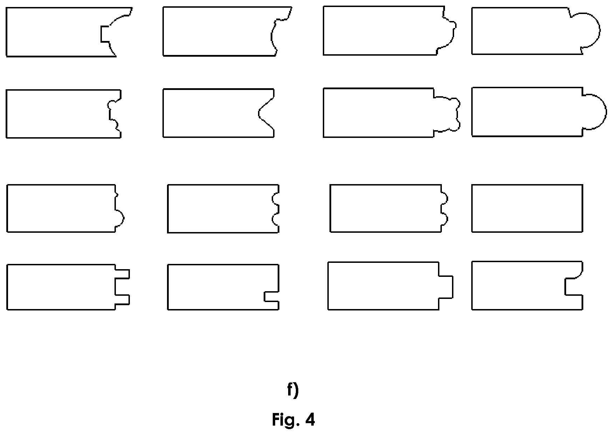

The pivot housing 1 can be rotated against the pivot tenon 3 (angle alpha in fig. 4a) before they are soldered, welded, glued or connected to each other by means of external elements: buckle, rivet, bolt. Fig. 4a illustrates the way of determining the position of the pivot housing 1 against the pivot tenon 3, whereas fig. 4b illustrates the way of determining the position of the pivot tenon 3 against the support element 4.

After determining the position of the pivot tenon 3 against the support element 4 (angles betha *1* and *betha 2* in fig. 4b), the pivot tenon 3 fixing is done on the support element 4, which is illustrated in fig. 4c. In the shown embodiment, the support element in the shape of the tube 4 is fixed by pressing the support element 4 in the pivot tenon 3 (*crimping*), which is illustrated by fig. 4e. Considering the above, it is also important that in the provided illustration, the area 8 of the tube 4, provided to fix the pivot tenon 3, is not pre-machined and the tube 4 obtains its shape, which is required to keep it in the pivot tenon 3 by impressing the shape of the pivot tenon 3 as a result of pressing the tube 4 inside with the pressure element 18. The support element 4 matches with the pivot tenon 3, which is facilitated by the protrusions 9. The structure of the protrusion 9 illustrated in fig. 4e makes it possible for a typical tube 4 to match with the pivot tenon 3 while forcing it into the pivot tenon 3 so as to make the protrusions 9 come in contact with the fixing element surface, which has been tested during the processes of such assembly performed so far. This matching makes the support element 4 and the pivot tenon 3 adjoin to each other in the fixing area 8, which gives strong, durable connection. As it is seen in fig. 4c and 4e, the pivot tenon 3 has the protrusion 9 on its inner surface. The presence of the protrusion 9 makes the support element 4 adjoin the pivot tenon 3 even better in the fixing area 8. It is possible to apply higher number of protrusions or cavities 9, it is preferable due to the positioning of the support element 4 against the pivot tenon 3 to use two or more protrusions or cavities 9. The height of said protrusions or cavities 9 may, for example, amount to 50% of the inner cross section of the pivot tenon 3, but it can also be smaller or bigger than that value and can depend on the quantity and the shape of said protrusions or cavities 9. Furthermore, the pivot tenon 3 visible in fig. 4c has projections 10 on the ends of its inner profile. These projections additionally prevent the support element 4 from sliding out of the pivot tenon 3. The holes 6 in the support element 4, made before forcing it into the pivot tenon 3, form, after forcing it into the pivot tenon 3, an additional protection against an off-set of the pivot tenon 3 along the axis of the element 19 of the pivot tenon 3, provided to fix it to the support element 4. Said holes 6 additionally take the degrees of freedom of the pivot tenon 3 in the axis of the element 19 of the pivot tenon provided to fix the pivot tenon to the support element 4.

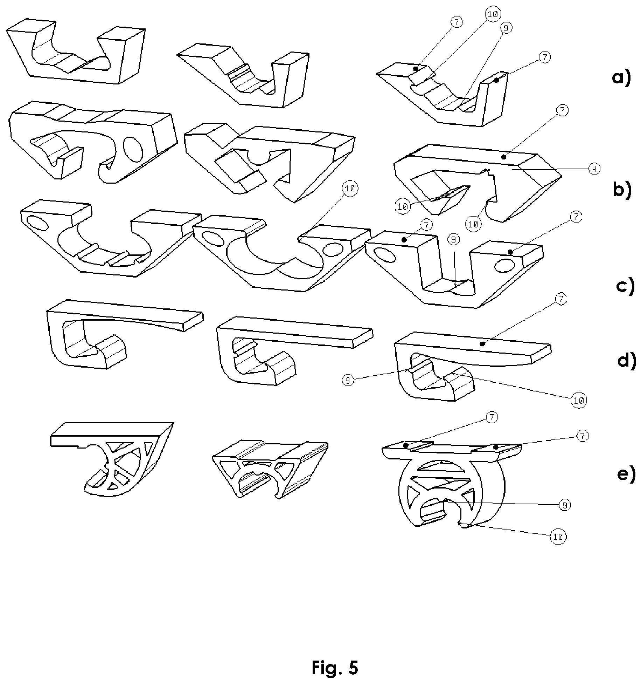

The selected, preferable shapes of the pivot tenon 3 are shown in fig. 5. The pivot tenons 3 are used, the inner profile of which has the shape corresponding to the shape of the tube 4 in the fixing area 8, which makes the pivot tenon 3 adjoin the tube 4 in the fixing area 8.

Fig 5a illustrates the pivot tenon 3, which itself becomes an element tightening the support element 4. When using this kind of the pivot tenon 3, the support element 4 is not separated by the pivot tenon 3 from the pivot housing 1 but it can adjoin the pivot housing 1.

Fig 5b illustrates the pivot tenon 3 to which the support element (the tube 4) is fixed obliquely from the bottom.

Fig 5c illustrates the pivot tenon 3 in which the clamp element used to fix it with the pivot housing 1 is divided into two smaller fields (into two smaller surfaces). The advantage of such solution is avoiding internal stresses which occur in large area glue, solder or weld connections. Such stresses increase after forcing the fixing element into the pivot tenon 3 and dividing a large surface into two or more smaller ones reduces their negative impact on the connection between the tube 4 and the pivot tenon 3.

Fig 5b illustrates the pivot tenon 3 to which the support element (the tube 4) is fixed obliquely from the side.

Fig 5e shows profiles of the pivot tenons 3, optimised for the production in the extrusion process. These profiles are optimised with regard to the ratio of weight to the strength of the clamp required to convey assembly and operational stresses. The illustrated shapes allow minimising the deformations of the element 7 of the pivot tenon 3, used to fix it with the pivot housing 1.

Instead of fixing by forcing into the pivot tenon (crimping), discussed above, or apart from it, the pivot tenon 3 and the support element 4 can be connected by gluing, welding, soldering or other methods known to those skilled in the art, according to desired connection strength and loads which the connection must resist. It is preferable to avoid additional fasteners such as bolts, rivets, pins.

### Example 3

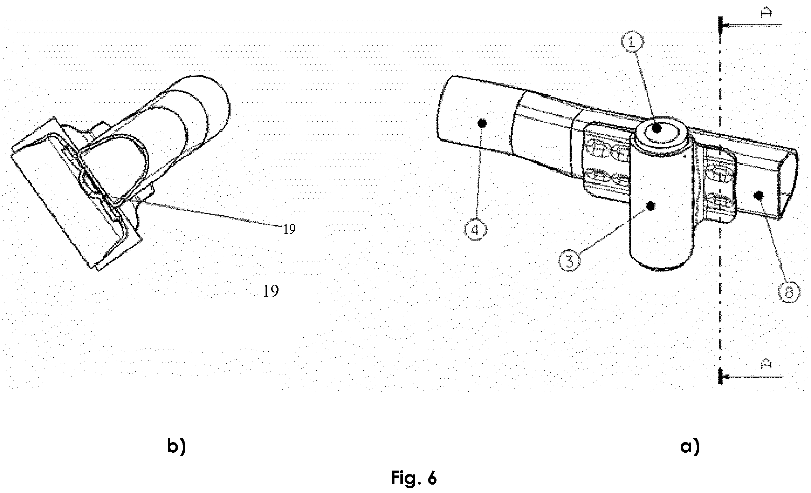

Fig. 6 shows a close-up view of another example of the pivot housing 1 and the pivot tenon 3 fixed on the support tube 4. The pivot tenon 3 illustrated herein is made by the method of metal sheet cold plastic working (stamping) and welded to the support element 4. The pivot tenon 3 made in such a way can be welded, soldered or glued to the support element 4. The pivot housing 1 in the provided example plays a role of a bearing; therefore it is made of material with good tribological properties, for example plastics, copper alloy or other. The pivot housing 1 can also be made to cooperate with a bearing or many bearings; then it can be made of other materials, e.g. aluminium alloy or zinc alloy.

In yet another embodiment, the elements 7, 19 of the pivot tenon 3 and the pivot housing 1 can constitute a single, integrally formed part. This way, the integrated pivot tenon 3 with the pivot housing 1 has been developed which can be made of metal or organic material (e.g. formed by injection or under pressure).

### Example 4

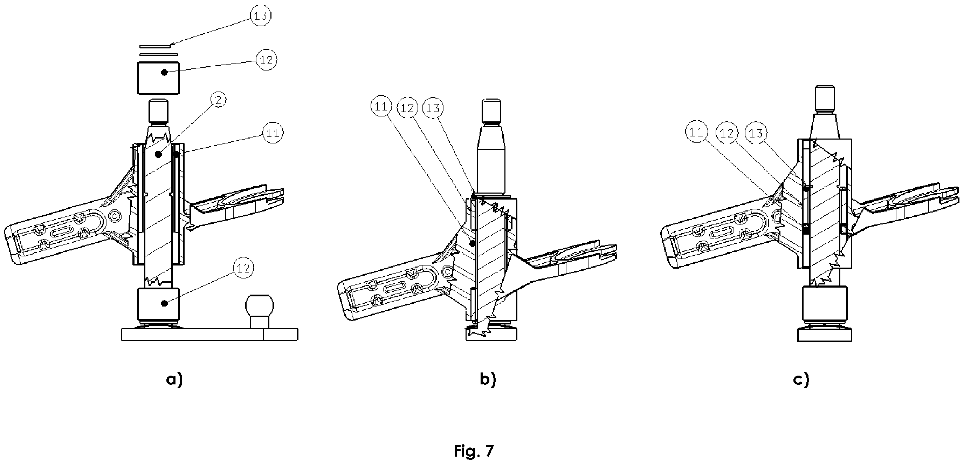

Fig. 7 schematically shows the method of assembling the shaft 2 in the pivot housing 1 provided with the ribs 11 and the behaviour of the shaft 2 during the assembly process (fig. 7a), regular use (fig. 7b) and in case a pedestrian's or a passenger's body hits the shaft 2 (a road accident - fig. 7c).

As it is seen in fig. 7a and fig. 7b, the shaft 2 is fixed in the pivot housing 1 through the slide bearings 12 and secured with the Seeger ring 13, which ensures that the shaft 2 remains in its position under loads related to the regular use or service of the car, and in case of a body impact, e.g. a pedestrian's head, the head encounters smaller resistance as the shaft 2 falls out of the pivot housing 1 reducing the injuries being caused. This is preferable with regard to the standard tests of the pedestrians' protection and allows scoring more points, e.g. in the EURO NCAP tests. In the assembly process shown in fig. 7a, the ribs 11 are preliminarily sheared. At the same time, resting the bearings 12 on such preliminarily sheared ribs 11 ensures safety of a pedestrian or a passenger who, in case of an accident, would hit the shaft 2 from the top. In such case, shown in fig. 7c, ribs 11 will be further sheared by the bearing 12 while the shaft 2 will fall inside the pivot housing 1, transferring adequate energy and thus protecting the pedestrian's body from injuries. The advantage of using the pre-sheared rib 11 is the possibility, during the assembly, to measure the energy required to move the shaft 2 with the bearing 12 inside the pivot housing 1 as well as the force required to do that, which cannot be done by means of solutions known in the prior art (e.g. WO1998028164). Presently, in order to predict the behaviour of automotive parts during a collision with a human body, models are used for which the requirements regarding the resistance of the shafts 2 during such collision are deribed both in terms of the force as well as the energy. This offers the advantage of the universal character of this type of the body protection during a collision with a car, regardless of the calculation model used while designing the car. Another advantage of using the preliminarily sheared rib 11 is the possibility to obtain strictly defined, limited in tolerance, repeatable (capability) resistance of the force of the energy, which presently cannot be obtained in an economically justified way in case of connections that employ a forced-in bearing with a pivot housing, due to a very high sensitivity of the resistance to the normal process-related changes of geometry of bearings and pivot housings.

Such solution can be employed also apart from the wiper system e.g. in automotive bumpers or automotive seats.

The pivot housing 1 which is shown in the embodiment in fig. 3 has one rib 11. Alternatively, there can be more ribs 11.

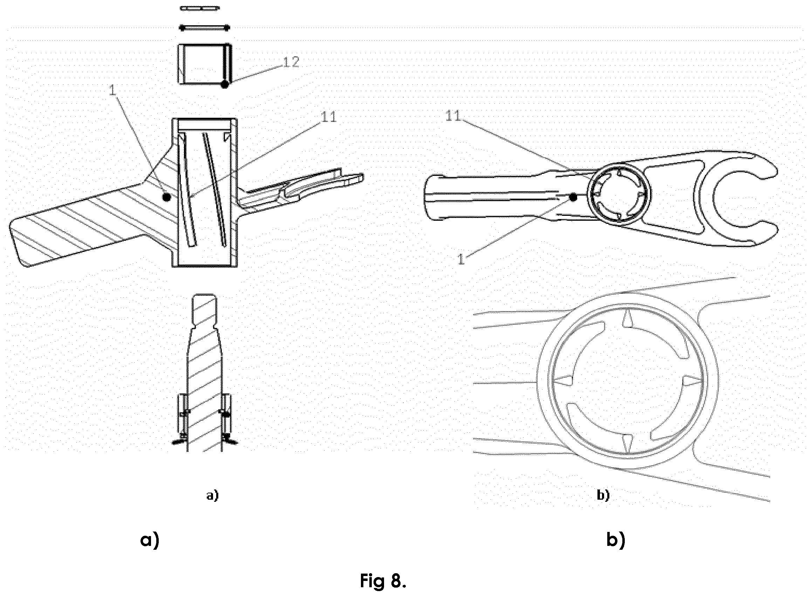

Preferably, the ribs 11 should have a smaller dimension at the base connecting with the pivot housing 1 and a bigger one above, which facilitates shearing the rib 11 and protects from the unfavourable effect of the rib 11 being crushed between the bearing 12 and the pivot housing 1. The ribs 11 featuring such geometry are illustrated in fig. 8b. Additionally, to facilitate the production process using the injection method and also preferably due to the repeatability of the resistance, the ribs 11 can be inclined around the axis of the shaft 2 which is also shown in fig. 8b and even better shown in fig. 8a The profile of the ribs 11 (in cross-section) can alter along their axis.

### Example 5

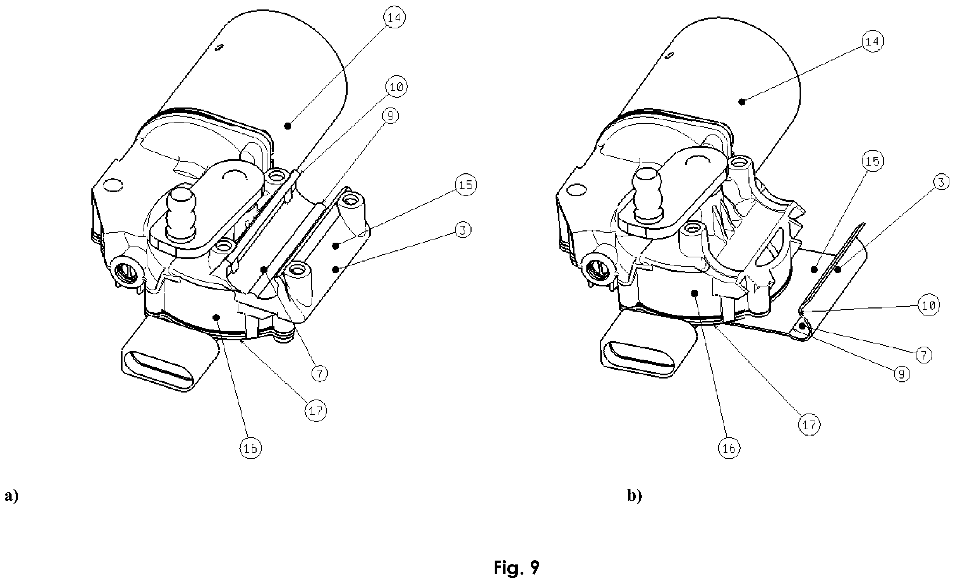

Fig. 9 shows further two embodiments, wherein the pivot tenon 3 is integrated with the motor 14 of the wiper system. Such solution allows fixing the motor 14 on the support element 4 without having to use additional fixing parts (fasteners).

In the embodiment shown in fig. 9a, the pivot tenon 3 is integrated with the case 16 of the motor gear, whereas in the embodiment shown in fig. 9b the pivot tenon 3 is integrated with the cover 17 of the motor gear case.

## Claims

1. A unit for fixing an automotive wiper device, comprising at least one pivot housing for setting the automotive wiper arm fixing shaft, wherein said pivot housing (1) is suspended through a pivot tenon (3) on a support element (4), the ends of the support element (4) being provided with grommets (5) for fixing the support element (4) to the car, wherein said support element (4) has a specially shaped area (8) provided for fixing said pivot tenon (3), said pivot tenon (3) having an internal profile matched to fit an external profile of said support element (4) in said area (8) **characterized in that** said pivot tenon (3) is fixed on said support element (4) by crimping the support element (4) into it.

2. The unit according to claim 1, **characterised in that** it comprises one, two or three said pivot housings (1), each of which is suspended through a pivot tenon (3) on said support element (4).

3. The unit according to claim 1 or 2, **characterised in that** said pivot housing (1) and said pivot tenon (3) are made of organic material, preferably by extrusion or injection, and are connected with each other by bonding, welding or by means of external elements, preferably a buckle, a rivet or a bolt.

4. The unit according to claim 1 or 2, **characterised in that** said pivot housing (1) and said pivot tenon (3) are made of an aluminium alloy, zinc alloy, magnesium alloy, steel, sintered material or made in the extrusion, injection, sintering, cold or hot moulding technology and are connected with each other by soldering, welding, bonding, creasing or connected by means of external elements, preferably a buckle, a rivet or a bolt.

5. The unit according to claim 1 or 2, **characterised in that** said pivot tenon (3) comprises an element (7) provided for setting the pivot housing (1) in it and an element (19) fixing the pivot tenon (3) to the support element (4).

6. The unit according to claim 5, **characterised in that** said element (7) is connected with said clamp element (19) by means of cold plastic forming of metal sheets, soldering or welding.

7. The unit according to claim 5 or 6, **characterised in that** said elements (7) and (19) constitute a single, integrally formed part.

8. The unit according to any of the preceding claims , **characterised in that** said pivot tenon (3) has projections (10) at the ends of its internal profile.

9. The unit according to any of the preceding claims, **characterised in that** said pivot tenon (3) has at least one protrusion or cavity (9) on its internal profile, preferably an even number of protrusions or cavities (9).

10. The unit according to any of the preceding claims, **characterised in that** said pivot tenon (3) is additionally glued, soldered or welded to said support element (4).

11. The unit according to any of the preceding claims, **characterised in that** said support element (4) is a tube.

12. The unit according to any of the preceding claims, **characterised in that** said pivot housing (1) on its inner surface has at least one rib (11), directed towards the centre of the pivot housing (1), and preferably two or more such ribs (11).

13. The unit according to claim 12, **characterised in that** said rib (11) is preliminary sheared.

14. The unit according to claim 12 or 13, **characterised in that** said rib (11) has a smaller dimension at the base connecting with the pivot housing (1) and a bigger dimension above, and preferably it is additionally inclined around the axis of the shaft (2).

15. The unit according to claim 12 to 14, **characterised in that** said rib (11) has an alternating cross section along its axis.

16. The unit according to any of the preceding claims, **characterised in that** on said support element (4) there are holes (6) facilitating the positioning and fixing of said pivot tenon (3) on said support element (4).

## Patentansprüche

1. Einheit zur Befestigung einer Wischervorrichtung für ein Fahrzeug, aufweisend mindestens ein Schwenkgehäuse zum Einrichten des Fahrzeugwischerarmschafts, wobei das Schwenkgehäuse (1) über einen Schwenkzapfen (3) an einem Stützelement (4) aufgehängt ist, wobei die Enden des Stützelements (4) mit Durchführungstüllen (5) zum Befestigen des Stützelements (4) am Auto versehen sind, wobei das Stützelement (4) einen besonders geformten Bereich (8) aufweist, der zum Befestigen des Schwenkzapfens (3) vorgesehen ist, wobei der Schwenkzapfen (3) ein Innenprofil aufweist, das zum Passen zu einem Außenprofil des Stützelements (4) in dem Bereich (8) angepasst ist, **dadurch gekennzeichnet, dass** der Schwenkzapfen (3) am Stützelement (4) durch Eincrimpen des Stützelements (4) dort hinein befestigt ist.

2. Einheit nach Anspruch 1, **dadurch gekennzeichnet, dass** sie ein, zwei oder drei Schwenkgehäuse (1) aufweist, von denen jedes über einen Schwenkzapfen (3) am Stützelement (4) aufgehängt ist.

3. Einheit nach einem der Ansprüche 1 oder 2, **dadurch gekennzeichnet, dass** das Schwenkgehäuse (1) und der Schwenkzapfen (3) aus organischem Material hergestellt sind, vorzugsweise durch Extrusion oder Einspritzung, und durch Bonden, Schweißen oder mittels externer Elemente, vorzugsweise eine Schnalle, eine Niete oder einen Bolzen, miteinander verbunden sind.

4. Einheit nach einem der Ansprüche 1 oder 2, **dadurch gekennzeichnet, dass** das Schwenkgehäuse (1) und der Schwenkzapfen (3) aus einer Aluminiumlegierung, Zinklegierung, Magnesiumlegierung, Stahl, Sintermaterial hergestellt sind oder mit Extrusions-, Einspritzungs-, Sinter-, Kalt- oder Warmformtechnologie hergestellt sind und durch Löten, Schweißen, Bonden, Bördeln miteinander verbunden sind oder mittels externer Elemente, vorzugsweise eine Schnalle, eine Niete oder einen Bolzen, verbunden sind.

5. Einheit nach einem der Ansprüche 1 oder 2, **dadurch gekennzeichnet, dass** der Schwenkzapfen (3) ein Element (7), das zum Einrichten des Schwenkgehäuses (1) dort hinein vorgesehen ist, und ein Element (19) aufweist, das den Schwenkzapfen (3) am Stützelement (4) befestigt.

6. Einheit nach Anspruch 5, **dadurch gekennzeichnet, dass** das Element (7) mittels plastischem Kaltformen von Metallblechen, Löten oder Schweißen mit dem Klemmelement (19) verbunden ist.

7. Einheit nach einem der Ansprüche 5 oder 6, **dadurch gekennzeichnet, dass** die Elemente (7) und (19) ein einzelnes, einstückig ausgebildetes Teil bilden.

8. Einheit nach einem der vorhergehenden Ansprüche, **dadurch gekennzeichnet, dass** der Schwenkzapfen (3) Vorsprünge (10) an den Enden seines Innenprofils aufweist.

9. Einheit nach einem der vorhergehenden Ansprüche, **dadurch gekennzeichnet, dass** der Schwenkzapfen (3) mindestens einen Vorsprung oder Hohlraum (9) an seinem Innenprofil aufweist, vorzugsweise eine gerade Anzahl von Vorsprüngen oder Hohlräumen (9).

10. Einheit nach einem der vorhergehenden Ansprüche, **dadurch gekennzeichnet, dass** der Schwenkzapfen (3) zusätzlich an das Stützelement (4) geklebt, gelötet oder geschweißt ist.

11. Einheit nach einem der vorhergehenden Ansprüche, **dadurch gekennzeichnet, dass** das Stützelement (4) ein Rohr ist.

12. Einheit nach einem der vorhergehenden Ansprüche, **dadurch gekennzeichnet, dass** das Schwenkgehäuse (1) auf seiner Innenfläche mindestens eine Rippe (11), die zur Mitte des Schwenkgehäuses (1) gerichtet ist, und vorzugsweise zwei oder mehr derartiger Rippen (11) aufweist.

13. Einheit nach Anspruch 12, **dadurch gekennzeichnet, dass** die Rippe (11) vorbereitend geschert ist.

14. Einheit nach einem der Ansprüche 12 oder 13, **dadurch gekennzeichnet, dass** die Rippe (11) eine kleinere Abmessung an der Basis, die mit dem Schwenkgehäuse (1) verbindet, und eine größere Abmessung darüber aufweist und zusätzlich um die Achse des Schafts (2) geneigt ist.

15. Einheit nach einem der Ansprüche 12 bis 14, **dadurch gekennzeichnet, dass** die Rippe (11) einen alternierenden Querschnitt entlang ihrer Achse aufweist.

16. Einheit nach einem der vorhergehenden Ansprüche, **dadurch gekennzeichnet, dass** am Stützelement (4) Löcher (6) vorliegen, die die Positionierung und Befestigung des Schwenkzapfens (3) am Stützelement (4) ermöglichen.

## Revendications

1. Unité permettant de fixer un dispositif d'essuie-glace automobile, comprenant au moins un logement de pivotement pour placer l'arbre de fixation de bras d'essuie-glace automobile,
ledit logement de pivotement (1) étant suspendu par un tenon de pivotement (3) sur un élément de support (4), les extrémités de l'élément de support (4) étant munies d'oeillets (5) pour fixer l'élément de support (4) à l'automobile, ledit élément de support (4) ayant une zone (8) spécialement formée permettant de fixer ledit tenon de pivotement (3), ledit tenon de pivotement (3) ayant un profil interne conçu pour correspondre à un profil externe dudit élément de support (4) dans ladite zone (8), **caractérisée en ce que**
ledit tenon de pivotement (3) est fixé sur ledit élément de support (4) par sertissage de l'élément de support (4) dans celui-ci.

2. Unité selon la revendication 1, **caractérisée en ce qu'**elle comprend un, deux ou trois logements de pivotement (1), chacun d'eux étant suspendu par un tenon de pivotement (3) sur ledit élément de support (4).

3. Unité selon la revendication 1 ou 2, **caractérisée en ce que** ledit logement de pivotement (1) et ledit tenon de pivotement (3) sont réalisés en matière organique, de préférence par extrusion ou injection, et sont reliés entre eux par collage, soudage ou au moyen d'éléments externes, de préférence une boucle, un rivet ou un boulon.

4. Unité selon la revendication 1 ou 2, **caractérisée en ce que** ledit logement de pivotement (1) et ledit tenon de pivotement (3) sont réalisés en alliage d'aluminium, en alliage de zinc, en alliage de magnésium, en acier, en matériau fritté ou réalisés par la technologie d'extrusion, d'injection, de frittage, de moulage à froid ou à chaud et sont reliés entre eux par brasage tendre, soudage, collage, plissage ou reliés par des éléments externes, de préférence une boucle, un rivet ou un boulon.

5. Unité selon la revendication 1 ou 2, **caractérisée en ce que** ledit tenon de pivotement (3) comprend un élément (7) permettant de placer le logement de pivotement (1) en son sein et un élément (19) fixant le tenon de pivotement (3) à l'élément de support (4).

6. Unité selon la revendication 5, **caractérisée en ce que** ledit élément (7) est relié audit élément de serrage (19) par formage plastique à froid de tôles métalliques, brasage tendre ou soudage.

7. Unité selon la revendication 5 ou 6, **caractérisée en ce que** lesdits éléments (7) et (19) constituent une pièce unique formée d'un seul tenant.

8. Unité selon l'une quelconque des revendications précédentes, **caractérisée en ce que** ledit tenon de pivotement (3) a des saillies (10) aux extrémités de son profil intérieur.

9. Unité selon l'une quelconque des revendications précédentes, **caractérisée en ce que** ledit tenon de pivotement (3) a au moins une saillie ou cavité (9) sur son profil intérieur, de préférence un nombre pair de saillies ou cavités (9).

10. Unité selon l'une quelconque des revendications précédentes, **caractérisée en ce que** ledit tenon de pivotement (3) est en outre collé, brasé ou soudé sur ledit élément de support (4).

11. Unité selon l'une quelconque des revendications précédentes, **caractérisée en ce que** ledit élément de support (4) est un tube.

12. Unité selon l'une quelconque des revendications précédentes, **caractérisée en ce que** ledit logement de pivotement (1) a sur sa surface intérieure au moins une nervure (11) dirigée vers le centre du logement de pivotement (1), et de préférence au moins deux de ces nervures (11).

13. Unité selon la revendication 12, **caractérisée en ce que** ladite nervure (11) est préalablement coupée.

14. Unité selon la revendication 12 ou 13, **caractérisée en ce que** ladite nervure (11) a une dimension plus petite au niveau de la base en liaison avec le logement de pivotement (1) et une dimension plus grande au-dessus, et de préférence elle est également inclinée autour de l'axe de l'arbre (2).

15. Unité selon les revendications 12 à 14, **caractérisée en ce que** ladite nervure (11) a une section transversale alternée le long de son axe.

16. Unité selon l'une quelconque des revendications précédentes, **caractérisée en ce que** sur ledit élément de support (4) se trouvent des trous (6) facilitant le positionnement et la fixation dudit tenon de pivotement (3) sur ledit élément de support (4).
